Europäisches Patentamt

European Patent Office

Office européen des brevets

(11) Publication number: **0 071 645**
**B1**

# EUROPEAN PATENT SPECIFICATION

(45) Date of publication of patent specification: **19.08.87**

(21) Application number: **82900903.4**

(22) Date of filing: **17.02.82**

(86) International application number:
**PCT/US82/00192**

(87) International publication number:
**WO 82/02952 02.09.82 Gazette 82/21**

(51) Int. Cl.⁴: **G 01 N 21/85,** G 01 N 21/59

(54) **DOUBLE BEAM PHOTOMETER FOR MEASURING FLUID SAMPLES.**

(30) Priority: **17.02.81 US 235253**

(43) Date of publication of application:
**16.02.83 Bulletin 83/07**

(45) Publication of the grant of the patent:
**19.08.87 Bulletin 87/34**

(84) Designated Contracting States:
**CH DE FR GB LI**

(56) References cited:
**DE-A-2 521 453**
**US-A-3 538 337**

(73) Proprietor: **BECKMAN INSTRUMENTS, INC.**
**Executive Office 2500 Harbor Boulevard Box
3100**
**Fullerton California 92634 (US)**

(72) Inventor: **BERICK, Alan C.**
**555 Pierce Street 326**
**Albany, CA 94706 (US)**

(74) Representative: **Wotherspoon, Graham et al
FITZPATRICKS 4 West Regent Street
Glasgow G2 1RS Scotland (GB)**

Courier Press, Leamington Spa, England.

## Description

### Background of the invention

#### 1. Field of the invention

The present invention relates generally to measurement of fluid samples and, more particularly to optical measurement of such samples in a photometric flow cell. The invention is particularly suited for use in a liquid chromatographic system where a stream of successive fluid sample fractions eluted from a chromatographic column is flowed through a photometric flow cell for analysis of individual sample fractions.

#### 2. Description of the prior art

Double beam photometers have long been used in fluid flow systems to optically measure samples. In one common form, (see DE—A—2521453) such photometers comprise a flow cell body having a pair of light transmissive passageways—a sample passageway configured to receive a fluid sample and a reference passageway configured to receive a reference fluid or no fluid at all. Light from a source is split into a sample beam and a reference beam and passed through the corresponding sample and reference passageways and hence through any sample or reference fluid therein. A light detector intercepts light emerging from the respective passageways to derive a ratio measurement of sample and reference beam energy and hence a measure of characteristic (usually absorbance) of the sample. A principal advantage of a double beam system is its inherent ability to reject common mode noise effects in the two paths, and hence to generate an output signal exhibiting a high common mode rejection ratio.

In US—A—3538337 an instrument is disclosed providing a compensating signal for correcting non-linearities in the analog electronic system, in which instrument a reference beam having a higher intensity than the sample beam is employed.

In high pressure liquid chromatography (HPLC), double beam flow cell photometers have been adapted to receive and optically measure a stream of successive fluid sample fractions eluted from a chromatographic column. The sample fractions (carried in a solvent matrix) are typically minute in volume (e.g. 100 μl—1.0 ml), closely spaced, low in concentration and are flowed at high pressure up to as high as about 40 atmospheres in the flow cell.

In designing double beam flow cells for HPLC applications, configurations are desired which measure sample fractions with maximum resolution and sensitivity. Resolution is an indication of the system's ability to distinguish measurements of successive, closely spaced flowing samples, i.e. to distinguish the "peaks" generated in the photometer output optical signal representative of such samples. Sensitivity is an indication of the minimum concentration or amount of sample which must be present to be distinguished as sample from the baseline noise of the photometer output signal. In these respects a common prior flow cell configuration comprises sample and reference passageways identical in size and shape. Apparently, identical sample and reference passageways were felt to be desirable to provide a symmetry or balance in the optics geometry of the flow cell to establish adequate common mode rejection and resolution for the system.

As prior flow cell designs have been perfected so-called "shot" noise in the photometer output signal has become a more significant factor. Shot noise is a high and low frequency noise signal superimposed on the output optical baseline signal of the photometer which is believed to represent statistical variations in light beam intensity. The effect of the shot noise signal is to decrease the sensitivity of the photometer. By decreasing system sensitivity, shot noise impairs the system's ability to measure samples of low concentrations. In effect, then, the performance of the prior flow cells, though improved, has become limited by shot noise. One possible approach for contending with shot noise is to increase the light energy level in the sample passageway by increasing the passageway diameter. While such effects a shot noise reduction, it is at the expense of a substantial decrease in system resolution.

Accordingly, a need exists for a double beam photometer for receiving and measuring fluid samples without the drawbacks of the prior art. The present invention meets these needs.

### Summary of the invention

The present invention relates to an improved double beam photometer for measuring fluid samples in a manner which overcomes the drawbacks of the prior art. The improved photometer exhibits high sensitivity together with high resolution and high common mode rejection. The improved double-beam arrangement is achieved in a commercially practical form which is simple and inexpensive in construction and reliable in operation.

Furthermore the present invention relates to a photometer of the type comprising: a double beam flow cell photometer for measuring a fluid sample, comprising a light source, means defining sample and reference light beam paths configured to receive light from the source and pass the light therealong and through a fluid sample in the sample beam path, means for flowing fluid samples into and from the path of the sample beam, and detector means including first and second detectors in the sample and reference beam paths for measuring the relative intensities of the sample and reference beams to derive a detector output signal providing a measure of the effect of the fluid sample on the sample light beam. The applicant has discovered that increasing the relative energy of light in the reference beam path to exceed that of the sample beam path reduces shot noise in the photometer output signal, thereby increasing system sensitivity, while maintaining the desired optical resolution and common mode rejection ratio of the photometer. The invention accordingly is as defined in apparatus claim 1 and method claim 7. In a preferred embodiment, the regulating means comprises limiting apertures for light entering each optical path with the limiting aperture for the reference beam path being larger than that for the sample beam path.

In the preferred embodiment, the sample and reference beam paths are through corresponding sample and reference passageways of a flow cell body.

The invention further contemplates means cooperating with the light source to define a given area of the source from which light is passed to the sample and reference beam paths. Such an arrangement reduces parallax problems which can occur when the areas of the source viewed by sample and reference are not coincident and which in turn lead to poor common mode rejection if the source has spatial variations in intensity.

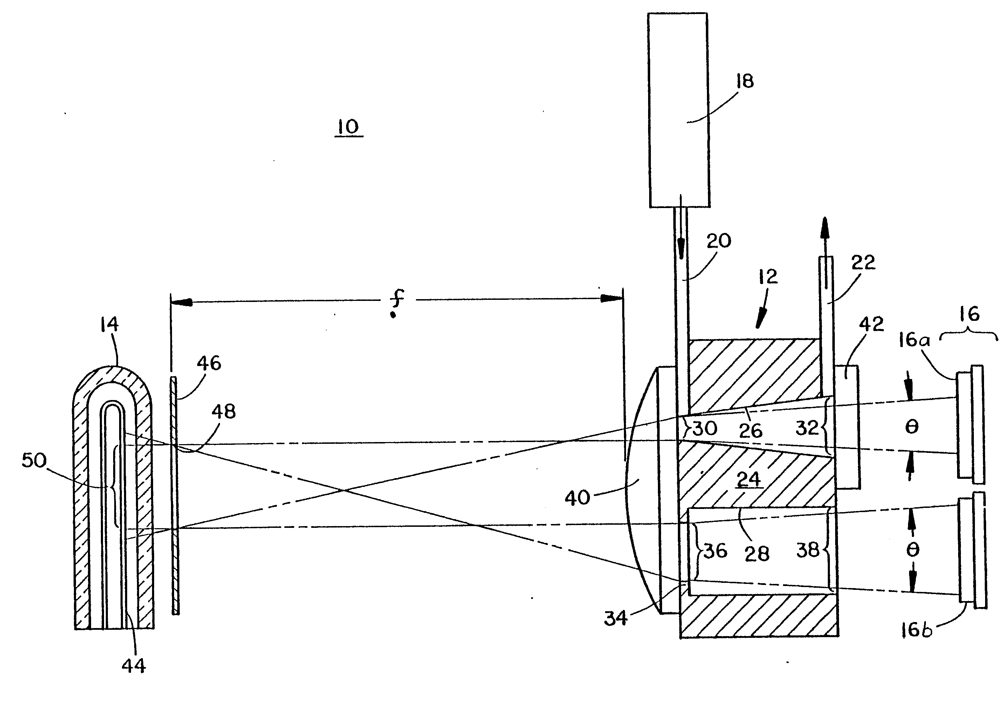

Brief description of the drawing

The figure is an optical diagram of a double beam photometer of the present invention as incorporated in an HPLC system and illustrates in vertical cross section the flow cell of the photometer. Limiting rays of optical beam paths of the photometer are illustrated in phantom outline.

Description of the preferred embodiment

As shown in the drawing, the present invention is embodied in a double beam photometer 10 comprising a double beam flow cell 12 disposed in an optical path between a light source 14 and an optical detector 16. The flow cell is adapted to receive liquid sample fractions flowed under pressure from a liquid chromatograph column 18 through a supply conduit 20 and to discharge the sample after analysis through a discharge conduit 22. The discharge conduit is connected to a back pressure regulator (not shown) for establishing a requisite pressure in the flow path from column 18 through the flow cell 12. Typically, the discharge conduit is connected to a suitable waste receptacle or sump into which the fluid is flowed.

The flow cell 12 comprises a generally cylindrical body 24. A pair of generally parallel sample and reference passageways 26 and 28, respectively, extend between the ends of the body 24. Supply conduit 20 opens into one end of sample passageway 26 while discharge conduit 22 opens into the opposite end of the same passageway. With such an arrangement, sample fractions eluted from column 18 are flowed under pressure through supply conduit 20 into sample passageway 26, through the sample passageway, and out discharge conduit 22 to waste. Reference passageway 28 may include similar supply and discharge conduits (not shown) at its opposite ends for flowing reference fluid into and out of the reference passageway. In flow cell 12, however, such conduits are omitted since the flow cell is primarily employed for sample analysis without the presence of a reference fluid in the reference passageway.

The walls of sample passageway 26 are tapered conically outwardly in the direction of fluid flow from supply conduit 20 to discharge conduit 22. The walls thus define a opening or aperture 30 at the frustum of the conical passageway and a relatively larger opening or aperture 32 at the base of the cone.

The reference passageway 28 is of generally cylindrical configuration. Body 24 forms an annulus 34 at the left end of the passageway which defines an opening or aperture 36 at such end. A relatively larger opening or aperture 38 is defined by the cylindrical wall at the opposite end of the reference passageway.

The left end openings 30 and 36 of the respective sample and reference passageways are closed by a light transmissive window 40 sealed to the end of the flow cell body 24. Window 40 is also configured as a collimating lens for light entering the sample and reference passageways. The opposite end of the sample passageway 26 is closed by a second light transmissive window 42. A clamp (not shown) retains windows 40 and 42 in place on the flow cell body 24 in a fluid-tight seal against the body. In the preferred embodiment of flow cell 12, the opposite or right hand end of the reference passageway 28 is open leaving the reference passageway exposed to the atmosphere. However, in the event the reference passageway were adapted to receive a reference fluid, then a further window or an extension of window 42 would be provided sealed to the right face of body 24 for closing this end of the reference passageway.

Light source 14 is a gas discharge lamp having a generally U-shaped zone 44 of light emission at a selected wavelength. A mask 46 having an aperture 48 is positioned adjacent the lamp to define a given area 50 of the source emitting zone 44 from which light is passed by aperture 48 toward the flow cell 12. The light passed by aperture 48 is received and collimated by lens/window 40 and passed thereby as first and second light beams along paths through respective sample and reference passageways 26 and 28. Light emerging from the flow cell passageways 26 and 28 impinges on detectors 16a and 16b, respectively, which, in turn, generate output current signals indicative of the light energy striking each detector.

Optical analysis of the flowing sample fractions is performed in a conventional manner by measuring an optical characteristic of each sample fraction (e.g. absorbance) at the selected wavelength as the sample flows through passageway 26. In this regard, the output current signals of detectors 16a and 16b, representative of the energy of the sample and reference beams, respectively, exiting passageways 26 and 28, are processed to compare (as by ratioing) the sample and reference beam energies to derive a measure of the sample alone.

It will be noted that the sample and reference passageways 26 and 28 are configured so as to pass the respective sample and reference light beams therethrough without the light striking the interior walls of the passageways. Such minimizes noise caused by light deflecting from the passageway walls toward the detectors. The conically tapered wall of the sample passageway 26 contributes to such a result. Thus, even if a stream of sample fractions exhibiting changes in refractive index is flowed through passageway 26, such refractive index variations do not cause spurious deflection of radiation from the passage walls or corresponding output signal noise. In reference passageway 28, the entrance aperture 36 and the comparatively larger exit aperture 38 cooperate to accommodate passage of a generally conical beam through the passageway without the beam striking the passageway walls.

As previously mentioned, a primary aspect or feature of the present invention is the significant reduction in shot noise superimposed on the optical baseline output signal of the photometer. In that regard, it has been discovered that such significant reduction is achieved by regulating the relative light energy admitted through the reference and sample passageways such that the light energy in the reference beam exceeds that of the sample beam. Moreover, such noise reduction is achieved while minimizing noise due to refractive index variations and while maintaining high optical resolution and a high common mode rejection ratio.

To the foregoing ends and in accordance with the invention, the relative diameters of entrance apertures 36 and 30, respectively, to the reference and sample passageways 28 and 26 are controlled such that aperture 36 is larger in diameter than aperture 30. The apertures thus serve as means for regulating the relative energy of light in the beam paths such that more light energy is admitted into the reference passageway 28 and passed to corresponding reference detector 16b compared to the light energy reaching detector 16a through the sample passageway 26. In the preferred embodiment the diameter of reference passageway aperture 36 is approximately 1.4 times greater than the diameter of sample passageway aperture 30.

The significance of the increase in reference beam light energy with respect to the sample beam energy is illustrated as follows. Statistical fluctuations in the output current of a photodetector such as 16a or 16b is represented by

$$\frac{\Delta I}{I_0} = \sqrt{\frac{k}{I_0}}$$

where $I_0$ equals the average d.c. output current of the photodetector and k equals a constant independent of $I_0$. When the output signal of the overall detector 16 is the ratio of the output currents of the sample and reference beams, the total fluctuation in output signal of detector 16 is represented by:

$$\frac{\Delta R}{R} = \sqrt{k} \sqrt{\frac{1}{I_s} + \frac{1}{I_r}}$$

where $I_s$ equals the output current of sample beam detector 16a, $I_r$ equals the output current of the reference beam detector 16b, and R equals the ratio of the output currents. Since the magnitude of these statistical fluctuations in the detector output is inversely proportional to the square root of the output current it appears advantageous to maximize the light energy in both sample and reference beams. However, the light energy of the sample beam is limited by the sample passageway volume, which is limited by the volume of the sample measured, which is in turn limited by the resolution requirement of the photometer. Significantly, however, applicant has recognized that no such limitation of light energy is required for the reference beam.

With respect to the foregoing, assume, for example, that $I_r$ equals $I_s$. In such case it can be shown by the foregoing equations that the total output shot noise is about 41% greater than that for the sample beam alone. However, if $I_r$ is twice that of $I_s$, then the total output shot noise is only 22% greater than that of the sample beam alone. Moreover, if $I_r$ is four times greater than $I_s$, then the total shot noise is only 12% greater than that for the sample beam alone, and so on. Therefore, the result of increasing light energy in the reference beam relative to that in the sample beam is to correspondingly decrease the optical baseline shot noise in the detector output signal without sacrificing the superior common mode rejection ratio of high sensitivity of the double beam system. In effect, increasing the energy in the reference beam relative to that of the sample beam substantially reduces the contribution of the reference beam to the output shot noise level.

In dimensioning the photometer 10 in accordance with the invention, aperture 48 is placed as close to light source 14 as feasible to define the given source area 50 for viewing both sample and reference passageways. This reduces parallax problems which can occur when the areas of the source viewed by the sample and reference passageways are not coincident and which, in turn, lead to poor common mode rejection if the source has spatial variations in intensity. The beam dispersion angle θ is selected so as to minimize the interior volume of flow cell passageway 26 to ensure adequate sample resolution while assuring an adequate light throughput for minimum optical baseline noise. In this regard θ is defined as

$$\frac{2\tan^{-1}d}{2f},$$

where f is the focal length of lens 40 at the wavelength of use (here 254 nm) and d is the diameter of aperture 48. Once θ is fixed, the size of aperture 48 is adjusted to view as large an emitting zone 50 of the source 14 as feasible which completely fills the aperture with light. When this maximum dimension of aperture 48 is attained, then f will be maximum fixed by the maximum aperture dimension and by θ. Maximizing f tends to minimize the parallax problem.

While the nature and type of optical components in the foregoing system will vary depending upon the application and type of samples to be measured, one successfully operated system incorporated in a liquid chromatograph was constructed in accordance with the following specifications. Source 14 is a mercury lamp which emits at 254 nm. Aperture 48 of mask 46 is 0.125 inch ($3{,}1 \cdot 10^{-3}$ m) in diameter. Lens 40 has a focal length of 2.0 inches ($5.08 \cdot 10^{-2}$ m), an operating focal length at 254 nm of f=1.787 inches ($4{,}54 \cdot 10^{-2}$ m) and is spaced from mask 46 by this distance f. Entrance opening 30 of sample passageway 26 is 0.05 inches ($1{,}27 \cdot 10^{-3}$ m) in diameter while, in accordance with the present invention, entrance opening 36 of the reference passageway is 0.07 inches ($1{,}78 \cdot 10^{3}$ m) in diameter. Both passageways have a path length through body 24 of 10 mm. θ or the beam dispersion in flow cell 12 is 3.96°. Detector 16a and 16b have 5 mm diameter light sensitive areas spaced 7 mm center-to-center. The distance from the rear or right end of flow cell 12 to the detectors is 10 mm.

While photometer 10 has been illustrated with sample passageway 26 conically tapered and reference passageway 28 cylindrical, it will be understood that both could be conical or both could be cylindrical. Preferably conical beam paths through the passageways 26 and 28 are defined by the entrance and exit openings thereof. In another form, the passageways 26 and 28, instead of being generally parallel, are disposed at an angle such that their axes when extended rearwardly toward source 14 meet or converge so as to view a limited or focal area of the source. In this form, the collimating function of lens/window 40 is unnecessary.

While a preferred embodiment of the invention has been illustrated and described, it will be apparent that modifications may be made therein without departing from the invention defined in the appended claims.

## Claims

1. A double beam flow cell photometer for measuring a fluid sample, comprising a light source (14), means (24) defining a sample cavity (26) and a reference cavity (28) arranged side-by-side, optical means (46, 48, 40, 42) arranged to pass light from the light source (14) through said cavities (26, 28) as sampled and reference light beams to impinge upon respective sample and reference detector means (16A, 16B) positioned adjacent one another, means (20, 22) for flowing fluid samples into and from the sample cavity (26), said detector means (16) being responsive in the same environment to the relative intensities of the sample and reference beams to derive a detector output signal providing a measure of the effect of the fluid sample on the sample light beam, the output signal including a shot noise signal component, and the first and second detectors (16A, 16B) generating respective output current signals $I_s$ and $I_r$ such that for the ratio R of said signals the total fluctuation of the ratioed signal $\Delta$ R/R is proportional to

$$\sqrt{\frac{1}{I_s} + \frac{1}{I_r}}$$

characterised by means for determining the relative energy of light in the beam paths including limiting apertures (30, 36) for light in each of the beam paths, the limiting aperture (36) in the reference beam path being larger than that (30) in the sample beam path such that output current signal $I_r$ exceeds output current signal $I_s$ whereby the detector means (16) and determining means (30, 36) cooperate to reduce the contribution of the reference beam to the shot noise level in the output signal of the detector means.

2. The photometer of claim 1, in which the limiting aperture (36) in the reference path has a diameter 1.4 times that of the limiting aperture (30) in the sample path.

3. The photometer of any preceding claim, in which said means defining the cavities (26, 28) comprises a common body (24).

4. The photometer of claim 3, in which at least the sample cavity (26) has a frustoconical form of an angle greater than the dispersion angle of the light beam therethrough.

5. The photometer of claim 3 or claim 4 in which said light beam paths include a light transmissive window (40) arranged in front of the body (24) and configured as a collimating lens for light entering said passages (26, 28).

6. The photometer of any preceding claim where the light source (14) has a mask (46), having an aperture (48), positioned adjacent thereto to define a given area (50) of the light source (14) from which light is passed along said light beam paths.

7. A method of operating a double beam flow cell photometer of the type as defined in the pre-characterising portion of claim 1, characterised by determining the relative energy of light in the beam paths by means of limiting apertures in each of the paths, such that energy in the reference beam path exceeds that in the sample beam path, such that the output current signal $I_r$ of the detector (16B) for the reference beam path exceeds the output current signal $I_s$ of the detector (16A) for the sample beam path, and such that the contribution of the reference beam to the shot noise level in the output signal of the detector means is reduced.

**Patentansprüche**

1. Doppelstrahl-Durchflußzellen-Photometer zum Messen einer Flüssigkeitsprobe, mit einer Lichtquelle (14), mit Einrichtungen (24) zur Bildung eines Probenhohlraums (26) und eines Bezugshohlraums (28), die Seite an Seite angeordnet sind, mit optischen Einrichtungen (46, 48, 40, 42), die so angeordnet sind, daß sie Licht von der Lichtquelle (14) durch die Hohlräume (26, 28) als Proben- und Bezugs-Lichtstrahlen leiten, die auf jeweiligen Proben- und Bezugs-Detektoreinrichtungen (16A, 16B) auftreffen, die benachbart zueinander angeordnet sind, mit Einrichtungen (20, 22) zum Hindurchleiten von Flüssigkeitsproben in den Probenhohlraum (26) und aus diesem heraus, wobei die Detektoreinrichtungen (16) in der gleichen Umgebung auf die relativen Intensitäten der Proben- und Bezugsstrahlen ansprechen, um ein Detektorausgangssignal abzuleiten, das ein Maß der Auswirkung der Flüssigkeitsprobe auf den Probenlichtstrahl ist, wobei weiterhin das Ausgangssignal eine Schrotrauschen-Signalkomponente einschließt, und wobei die ersten und zweiten Detektoren (16A, 16B) jeweilige Ausgangsstromsignale $I_s$ und $I_r$ derart erzeugen, daß für das Verhältnis R der Signale die Gesamtfluktuation des Verhältnis gesetzten Signals $\Delta R/R$ proportional zu

$$\sqrt{\frac{1}{I_s} + \frac{1}{I_r}}$$

ist, gekennzeichnet durch Einrichtungen zur Bestimmung der relativen Lichtenergie in den Strahlpfaden unter Einschluß von Begrenzungsöffnungen (30, 36) für das Licht in jedem der Strahlpfade, wobei die Begrenzungsöffnung (36) in dem Bezugsstrahlpfad größer als die (30) in dem Probenstrahlpfad derart ist, daß das Ausgangsstromsignal $I_r$ das Ausgangsstromsignal $I_s$ übersteigt so daß die Detektoreinrichtungen (16) und die Einrichtungen (30, 36) zur Bestimmung der relativen Lichtenergie zusammenwirken, um den Beitrag des Bezugsstrahls zum Schrotrauschpegel in dem Ausgangssignal der Detektoreinrichtungen zu verringern.

2. Photometer nach Anspruch 1, dadurch gekennzeichnet, daß die Begrenzungsöffnung (36) in dem Bezugspfad einen Durchmesser aufweist, der dem 1.4-fachen Durchmesser der Begrenzungsöffnung (30) in dem Probenpfad entspricht.

3. Photometer nach einem der vorhergehenden Ansprüche, dadurch gekennzeichnet, daß die die Hohlräume (26, 28) bildenden Einrichtungen einen gemeinsamen Körper (24) umfassen.

4. Photometer nach Anspruch 3, dadurch gekennzeichnet, daß zumindestens der Probenhohlraum (26) eine kegelstumpfförmige Form mit einem Winkel aufweist, der größer als der Streuungswinkel des durch diesen Hohlraum hindurchlaufenden Lichtstrahls ist.

5. Photometer nach Anspruch 3 oder 4, dadurch gekennzeichnet, daß die Lichtstrahlpfade ein lichtdurchlässiges Fenster (40) einschließen, das vor dem Körper (24) angeordnet ist und als eine Kollimationslinse für das in die Hohlräume (26, 28) eintretende Lich ausgebildet ist.

6. Photometer nach einem der vorhergehenden Ansprüche, dadurch gekennzeichnet, daß die Lichtquelle (14) eine Maske (46) mit einer Öffnung (48) aufweist, die benachbart hierzu angeordnet ist, um einen vorgegebenen Bereich (50) der Lichtquelle (14) zu umgrenzen, von dem aus Licht entlang der Lichtstrahlpfade weitergeleitet wird.

7. Verfahren zum Betrieb eines Doppelstrahl-Durchflußzellen-Photometers dem im Oberbegriff des Anspruchs 1 definierten Art, gekennzeichnet durch die Bestimmung der relativen Lichtenergie in den Strahlpfaden mit Hilfe von Begrenzungsöffnungen in jedem der Pfade derart, daß die Energie in dem Bezugsstrahlpfad die Energie in dem Probenstrahlpfad überschreitet, derart, daß das Ausgangsstromsignal $I_r$ des Detektors (16B) für den Bezugsstrahlpfad das Ausgangsstromsignal $I_s$ des Detektors (16A) für den Probenstrahlpfad übersteigt, und derart, daß der Beitrag des Bezugsstrahls zum Schrotrauschpegel in dem Ausgangssignal der Detektoreinrichtungen verringert ist.

**Revendications**

1. Photomètre à cellule d'écoulement à rayon double pour mesurer un échantillon de fluide, comprenant une source de lumière (14), un moyen (24) définissant une cavité (26) de l'échantillon et une cavité de référence (28) agencées côte à côté, un moyen optique (46, 48, 40, 42) agencé pour laisser passer la lumière de la source de lumière (14) à travers lesdites cavités (26, 28) en tant que rayons lumineux d'échantillon et de référence pour faire impact sur des moyens respectifs détecteurs d'échantillon et de référence (16A, 16B) placés adjacents l'un à l'autre, un moyen (20, 22) pour l'écoulement d'échantillons de fluide dans et hors de la cavité (26) de l'échantillon, lesdits moyens détecteurs (16) répondant dans le même environnement aus intensités relatives des rayons d'échantillon et de référence pour dériver un signal de sortie du détecteur donnant une mesure de l'effet de l'échantillon de fluide sur le rayon lumineux de l'échantillon, le signal de sortie comprenant une composante de signal de bruit de tir et les premier et second détecteurs (16A, 16B) produisant des signaux respectifs de courant de sortie $I_s$ et $I_r$ tels que pour le rapport R desdits signaux, la fluctuation totale du rapport $\Delta R/R$ soit proportionnelle à

$$\sqrt{\frac{1}{I_s} + \frac{1}{I_r}}$$

caractérisé par un moyen pour déterminer l'énergie relative de la lumière dans les trajets des rayons contenant des ouvertures de limitation (30, 36) pour la lumière dans chacun des trajets des rayons, l'ouverture de limitation (36) dans le trajet du rayon de référence de limitation (36) dans le trajet du rayon de référence étant plus importante que celle (30) dans le trajet du rayon de l'échantillon de manière que le signal $I_r$ du courant de sortie dépasse le signal $I_s$ du courant de sortie pour qu'ainsi les moyens détecteurs (16) et le moyen de détermination (30, 36) coopèrent pour réduire la contribution du rayon de référence au niveau du bruit de tir dans le signal à la sortie des moyens détecteurs.

2. Photomètre de la revendication 1, où l'ouverture de limitation (36) dans le trajet de référence a un diamètre égal à 1,4 fois celui de l'ouverture de limitation (30) dans le trajet de l'échantillon.

3. Photomètre selon l'une quelconque des revendications précédentes, où ledit moyen définissant les cavités (26, 28) comprend un corps commun (24).

4. Photomètre de la revendication 3, où au moins la cavité (26) de l'échantillon a une forme tronconique d'un angle plus grand que l'angle de dispersion du rayon lumineux la traversant.

5. Photomètre de la revendication 3 ou la revendication 4, où lesdits trajets de rayons lumineux contiennent une fenêtre phototransmissive (40) agencée devant le corps (24) et configurée en tant que lentille de collimation pour la lumière entrant dans lesdits passages (26, 28).

6. Photomètre selon l'une quelconque des revendications précédentes, où la source de lumière (14) a un masque (46), ayant une ouverture (48), placé à proximité d'elle pour définir une surface donnée (50) de la source (14) de lumière d'où la lumière passe le long desdits trajets de rayons lumineux.

7. Méthode de fonctionnement d'un photomètre à cellule d'écoulement à rayon double du type tel que défini au préambule de la revendication 1,

caractérisée en ce qu'on détermine l'énergie relative de la lumière dans le trajets de rayons au moyen d'ouvertures de limitation dans chacun des trajets, de manière que l'énergie dans le trajet du rayon de référence dépasse celle dans le trajet du rayon de l'échantillon, de façon que le signal de courant $I_r$ à la sortie du détecteur (16B) pour le trajet du rayon de référence dépasse le signal de courant $I_s$ à la sortie du détecteur (16A) pour le trajet du rayon de l'échantillon et de manière que la contribution du rayon de référence au niveau du bruit de tir dans le signal de sortie des moyens détecteurs soit réduite.

10

16
16a
16b
θ   θ
22
42
32
12
18
20
26
24
28
30
36
38
34
40
f.
46
48
14
44
50

1